# EUROPEAN PATENT APPLICATION

(11) **EP 4 530 809 A1**
(43) Date of publication of application: **02.04.2025**
(21) Application number: 24752335.0
(22) Date of filing: 08.08.2024
(51) Int. Cl.: G06F 3/0484, G06F 9/448, G06F 9/451, G06F 9/4401

(54) **ELECTRONIC DEVICE, METHOD, AND COMPUTER-READABLE STORAGE MEDIUM FOR MAINTAINING EXECUTION OF SOFTWARE APPLICATION**

(30) Priority: 11.08.2023 KR 20230105922; 20.09.2023 KR 20230125964
(71) Applicant: Samsung Electronics Co., Ltd, Suwon-si, Gyeonggi-do 16677 (KR)
(72) Inventor: PARK, Taejin, Suwon-si Gyeonggi-do 16677 (KR); KIM, Minho, Suwon-si Gyeonggi-do 16677 (KR); OH, Hyewon, Suwon-si Gyeonggi-do 16677 (KR); KIM, Dongin, Suwon-si Gyeonggi-do 16677 (KR); KIM, Hyosun, Suwon-si Gyeonggi-do 16677 (KR); NOH, Gilyoung, Suwon-si Gyeonggi-do 16677 (KR)
(74) Representative: Nederlandsch Octrooibureau
(86) International application number: PCT/KR2024/011775
(87) International publication number: WO 2025/037842

(57) **Abstract**

An electronic device according to an embodiment includes a display, a processor, and memory. The processor is configured to allocate a first buffer area to a software application being executed in foreground. The processor is configured to display, on the display, an execution screen of the software application, being executed in the foreground, using the first buffer area. The processor is configured to, while displaying the execution screen on the display, obtain a first input. The processor is configured to, based on the first input, allocate a second buffer area corresponding to a virtual display, to the software application, and maintain the execution of the software application by allocating the second buffer area to the software application.

## Description

### [Technical Field]

The present disclosure relates to an electronic device, a method, and a computer readable storage medium for maintaining execution of a software application.

### [Background Art]

Recently, distribution of various types of electronic devices such as a smartphone, a tablet personal computer (PC), an augmented reality (AR) device, a virtual reality (VR) device, and/or a smart watch is expanding. The electronic device may include one or more displays for displaying at least one content. The electronic device may divide a buffer area of memory in order to output information indicating the at least one content through one or more displays.

### [Disclosure]

### [Technical Solution]

An electronic device according to an embodiment may comprise a display, a processor, and memory for storing instructions. The instructions, when executed by the processor, may be configured to cause the electronic device to allocate a first buffer area to a software application being executed in foreground. The instructions, when executed by the processor, may be configured to cause the electronic device to display, on the display, an execution screen of the software application, being executed in foreground, using the first buffer area. The instructions, when executed by the processor, may be configured to cause the electronic device to, while displaying the execution screen on the display, obtain a first input. The instructions, when executed by the processor, may be configured to cause the electronic device to, based on the first input, allocate a second buffer area corresponding to a virtual display, to the software application, and maintain the execution of the software application by allocating the second buffer area to the software application. While the second buffer area is allocated, the execution screen of the software application may not be displayed on the display.

In a computer-readable storage medium storing one or more programs according to an embodiment, the one or more programs, when executed by the electronic device, may be configured to cause the electronic device to allocate a first buffer area to a software application being executed in foreground. The one or more programs, when executed by the electronic device, may be configured to cause the electronic device to display, on the display, an execution screen of the software application, being executed in foreground, using the first buffer area. The one or more programs, when executed by the electronic device, may be configured to cause the electronic device to, while displaying the execution screen on the display, obtain a first input. The one or more programs, when executed by the electronic device, may be configured to cause the electronic device to, based on the first input, allocate a second buffer area corresponding to a virtual display, to the software application, and maintain the execution of the software application by allocating the second buffer area to the software application. While the second buffer area is allocated, the execution screen of the software application may not be displayed on the display.

An electronic device according to an embodiment may comprise a display, a processor, and memory for storing instructions. The instructions, when executed by the processor, may be configured to cause the electronic device to display, on the display, a first screen of a first software application based on a steady state. The instructions, when executed by the processor, may be configured to cause the electronic device to, while the first screen is displayed on the display, receive an input for execution of a second software application. The instructions, when executed by the processor, may be configured to cause the electronic device to, based on the input, preferentially perform processing of the first software application over processing of the second software application. The instructions, when executed by the processor, may be configured to cause the electronic device to, while preferentially performing processing of the first software application over processing of the second software application, display a second screen of the second software application on the display in place of the first screen. The second screen may include a visual object indicating information about the first software application while maintaining preferentially performing processing of the first software application over the processing the second software application.

### [Description of the Drawings]

FIG. 1 is a block diagram of an electronic device in a network environment according to various embodiments.
FIG. 2 illustrates an example of a block diagram of an electronic device according to an embodiment.
FIG. 3 illustrates an example of a flowchart indicating an operation of an electronic device according to an embodiment.
FIG. 4 illustrates an example of an operation in which an electronic device executes a software application in a foreground state according to an embodiment.
FIG. 5 illustrates an example of a flowchart indicating an operation in which an electronic device sets a buffer area corresponding to a virtual display according to an embodiment.
FIG. 6 illustrates an example of a flowchart indicating an operation of an electronic device according to an embodiment.
FIG. 7 illustrates an example of a flowchart indicating an operation of providing a notification for an electronic device to enter a second state according to an embodiment.
FIG. 8 illustrates an example of a flowchart indicating an operation of an electronic device according to an embodiment.
FIG. 9 illustrates an example of a flowchart indicating an operation of an electronic device according to an embodiment.
FIG. 10 illustrates an example of an operation in which an electronic device displays another screen superimposed on a screen of a software application according to an embodiment.
FIG. 11 illustrates an example of a flowchart indicating an operation in which an electronic device restricts execution of a second software application according to an embodiment.
FIG. 12 illustrates an example of a flowchart indicating an operation in which an electronic device provides a notification indicating execution of a second software application according to an embodiment.
FIG. 13 illustrates an example of a flowchart indicating an operation of an electronic device according to an embodiment.

### [Mode for Invention]

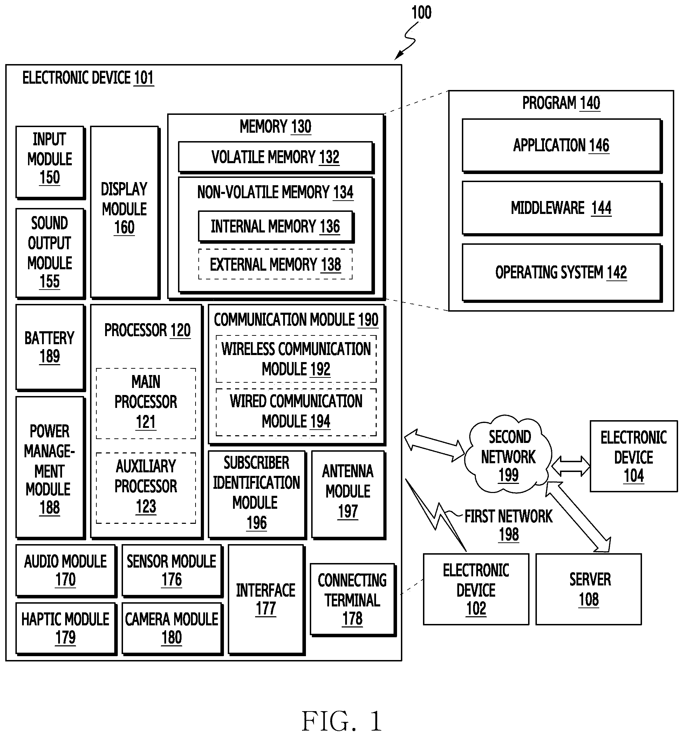

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

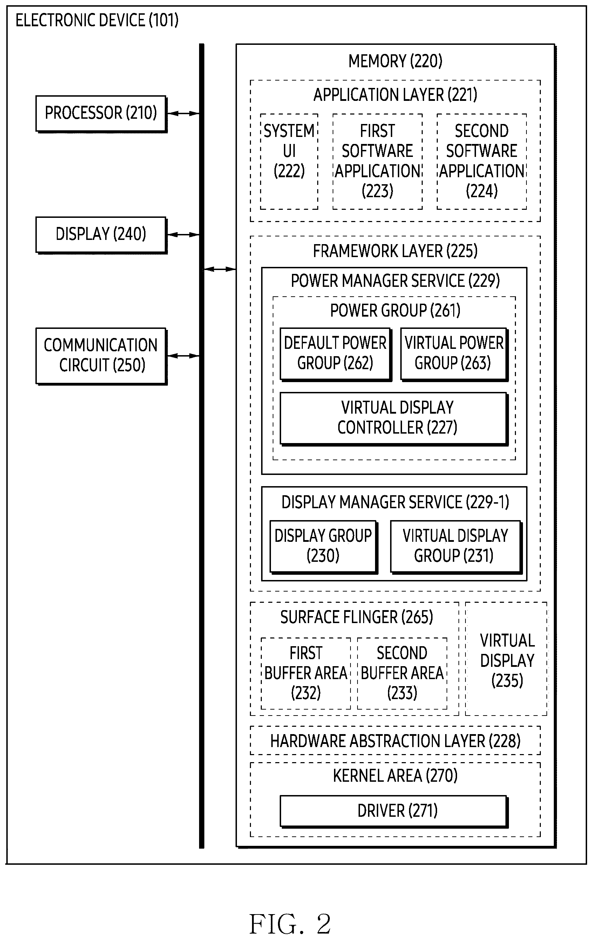

FIG. 2 illustrates an example of a block diagram of an electronic device according to an embodiment. An electronic device 101 according to an embodiment may include at least one of a processor 210, memory 220, a communication circuit 250, and a display 240. The processor 210, the memory 220, the communication circuit 250, and the display 240 may be electronically and/or operably coupled with each other by electronical component (or electrical component) such as a communication bus. Hereinafter, an operably coupling of hardware components may mean that a direct connection or an indirect connection between hardware components is established by wire or wirelessly so that the second hardware component is controlled by the first hardware component among the hardware components. Although illustrated based on different blocks, the embodiment is not limited thereto, and a portion (e.g., at least a portion of the processor 210, the memory 220, and the communication circuit 250) of the hardware components of FIG. 2 may be included in a single integrated circuit, such as a system on a chip (SoC). A type and/or number of the hardware components included in the electronic device 101 is not limited as illustrated in FIG. 2. For example, the electronic device 101 may include only some of the hardware components illustrated in FIG. 2.

The processor 210 of the electronic device 101 according to an embodiment may include hardware for processing data based on one or more instructions. The hardware for processing data may include, for example, an arithmetic and logic unit (ALU), a floating point unit (FPU), a field programmable gate array (FPGA), a central processing unit (CPU) and/or application processor (AP). The processor 120 may have a structure of a single-core processor, or may have a structure of a multi-core processor such as a dual core, a quad core, and a hexa core. The processor 210 may include the processor 120 of FIG. 1.

The memory 220 of the electronic device 101 according to an embodiment may include a hardware component for storing data and/or instructions inputted to the processor 210 and/or outputted from the processor 210 of the electronic device 101. The memory 220 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, hard disk, compact disk, solid state drive (SSD) and embedded multi media card (eMMC). The memory 220 may include memory 130 of FIG. 1.

The display 240 of the electronic device 101 according to an embodiment may output visualized information to a user. For example, the display 240 may be configured to visualize information generated by the processor 210 including a circuit such as a graphic processing unit (GPU). The display 240 may include a flexible display, a flat panel display (FPD), and/or electronic paper. The FPD may include a liquid crystal display (LCD), a plasma display panel (PDP), and/or a plurality of light emitting diodes (LEDs). The LED may include an organic LED (OLED).

The display 240 of the electronic device 101 according to an embodiment may include a sensor (e.g., a touch sensor panel (TSP)) for detecting an external object (e.g., a user's finger) on the display 240. For example, based on the TSP, the electronic device 101 may detect an external object that is in contact with the display 240 or is floating on the display 240. In response to detecting the external object, the electronic device 101 may execute a function related to a specific visual object corresponding to a position of the external object on the display 240 among visual objects being displayed in the display 240. The display 240 may include a flexible display having at least a partially curved shape and/or a deformable shape. The display 240 may include a display module 160 of FIG. 1.

The communication circuit 250 of the electronic device 101 according to an embodiment may include a hardware component for supporting transmission and/or reception of data between the electronic device 101 and an external electronic device (e.g., a server). The communication circuit 250 may include, for example, at least one of a MODEM, an antenna, and an optic/electronic (O/E) converter. The communication circuit 250 may support transmission and/or reception of an electrical signal based on various types of protocols, such as ethernet, local area network (LAN), wide area network (WAN), wireless fidelity (WiFi), Bluetooth, bluetooth low energy (BLE), ZigBee, long term evolution (LTE), and 5G new radio (NR). The electronic device 101 may receive information indicating at least one screen (or media content) through the communication circuit 250 from a server providing a first software application based on execution of the first software application.

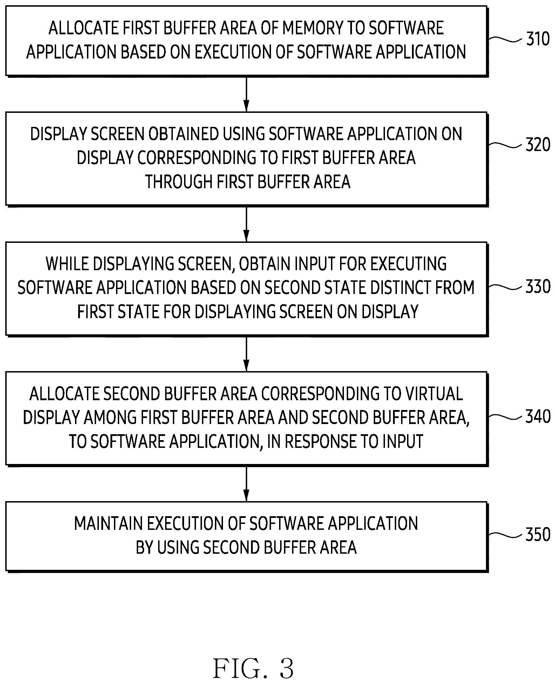

According to an embodiment, in the memory 220 of the electronic device 101, one or more instructions (or commands) indicating calculation and/or operation to be performed on data by the processor 210 of the electronic device 101 may be stored. A set of one or more instructions may be referred to as a firmware, an operating system, a process, a routine, a sub-routine, and/or an application. For example, the electronic device 101 and/or the processor 210 may perform at least one of the operations of FIGS. 3, 5 to 9, or 11 to 13 when a set of a plurality of instructions distributed in the form of the operating system, firmware, driver, and/or application is executed. Hereinafter, the fact that the application is installed in the electronic device 101 means that one or more instructions provided in the form of the application are stored in the memory 220, and the one or more applications are stored in an executable format (e.g., a file with an extension specified by the operating system of the electronic device 101) by the processor 210. For example, the application may include a program and/or a library related to a service provided to the user.

Referring to FIG. 2, programs installed in the electronic device 101 may be included in any one layer among different layers including an application layer 221, a framework layer 225 and/or a hardware abstraction layer (HAL) 228 based on a target. For example, in the hardware abstraction layer 228, programs (e.g., a module, or a driver) designed to target the hardware (e.g., the display 240) of the electronic device 101 may be included. For example, the layers illustrated in the memory 220 of FIG. 2 may be logically divided. However, it is not limited thereto. According to an embodiment, the layers may be stored in a specified area in the memory 220. Elements (e.g., layers and/or modules) in the memory described below may be in a logically divided state. However, it is not limited thereto.

For example, in the framework layer 225, programs (e.g., a display controller and/or a virtual display controller 227) designed to target at least one of the hardware abstraction layer 228 and/or the application layer 221 may be included. The programs included in the framework layer 225 may provide an executable application programming interface (API) based on another program. The electronic device 101 may provide (or output) data indicating the execution while maintaining the execution of at least one of the programs included in the framework layer 225.

For example, in the application layer 221, a program designed to target a user controlling the electronic device 101 may be included. As an example of programs included in the application layer 221, a first software application 223, a second software application 224, and/or a system interface (UI) 222 are exemplified, but the embodiment is not limited thereto. For example, programs (e.g., a software application) included in the application layer 221 may cause execution of a function supported by the programs included in the framework layer 225, by calling the API. For example, the electronic device 101 may display at least one media content (or screen) on the display 240 based on execution of the first software application 223. The first software application 223 may be an example of a software application in which execution is at least temporarily ceased in a background state. The electronic device 101 may select a display for outputting the at least one media content of the first software application 223 using the system UI 222. Based on execution of the second software application 224, the electronic device 101 may display another screen superimposed on a screen of the first software application 223. The other screen may be referred to as image layers in terms of being displayed superimposed on the screen.

The electronic device 101 according to an embodiment may enable a display group 230 or a virtual display group 231 related to a display manager service 229-1, in order to output the screen based on the execution of the first software application 223, by using a power manager service 229. The electronic device 101 according to an embodiment may control power to be transmitted to the display group 230 or the virtual display group 231, in order to enable the display group 230 or the virtual display group 231. For example, in case of processing an execution screen of the first software application 223 by using the virtual display group 231 among the display group 230 and the virtual display group 231, the electronic device 101 may at least temporarily cease the power to be transmitted to the display group 230. However, it is not limited thereto.

The electronic device 101 according to an embodiment may distinguish hardware and/or software in the electronic device 101 by using the power manager service 229. For example, the electronic device 101 may distinguish the hardware and/or the software in the electronic device 101 in order to control the display group 230 (or the virtual display group 231). The electronic device 101 may logically include the hardware and/or the software in the electronic device 101 used to control the virtual display group 231, in a virtual power group 263. The electronic device 101 may include hardware and/or software not related to a virtual display, in a default power group 261. For example, the default power group 261 may be related to the display group 230. The power group 261 may be classified as a class for controlling a state of the display group 230 (or the virtual display group 231) by using the power manager service 229. The electronic device 101 may drive a state for hardware and/or software (e.g., a virtual display 235) mapped to the virtual power group 263 based on a steady state, while driving a state for hardware (e.g., the display 240) and/or software mapped to the default power group 262 based on the low power state, by dividing a power group 261. The virtual power group 263 may be mapped to the virtual display group 231. The low power state may include a low power mode and a power saving mode. For example, in terms of the electronic device 101 displaying at least one screen (an AOD screen, an always on display screen) on the display based on the low power state, the low power state may be referred to as an AOD mode.

The display manager service 229-1 according to an embodiment may allocate a logical display (e.g., indicating a real display or a virtual display) to a specific display group (e.g., the display group 230 or the virtual display group 231) based on a logical display mapper. The logical display may include information about the resolution, density, and screen refresh rate of a screen that is related to hardware and/or software for outputting data about the screen and that may be outputted by the electronic device 101.

The display group 230 according to an embodiment may include hardware and/or software for displaying the screen by using the display 240. For example, the display group 230 may logically include the hardware and/or the software. The display group 230 may indicate a set of hardware and/or software for displaying the screen through the physically real display 240. For example, the display group 230 may be interlocked with the driver 271 for managing the display 240 in a kernel area 270 that is not allowed access by the user. The display group 230 may be referred to as a default display group, in terms of displaying a screen based on execution of at least one software application in the electronic device 101 by using the display 240 included in the display group 230, in the steady state of the electronic device 101. The display 240 may be referred to as a default display. The display group 230 may be controlled based on execution of the display controller.

The virtual display group 231 according to an embodiment may include hardware and/or software for outputting the screen through the virtual display 235. The virtual display group 231 may be controlled based on execution of the virtual display controller 227. The virtual display 235 may be an example of a display that is not physically real unlike the display 240. The virtual display 235 may be an example of software stored in the electronic device 101. The virtual display 235 may be used to process data (or task) for the screen without displaying the screen on the display 240. The electronic device 101 may process data about a screen that is substantially invisible to the user by using the virtual display 235. The electronic device 101 may maintain execution of a software application that provides the screen based on foreground, by processing data about the screen through the virtual display 235. For example, a software application in foreground state may be always displayed on the screen, whereas another software application in background state may not be displayed on the screen.

For example, the electronic device 101 may notify the user that a task for maintaining the execution of the software application is being preferentially processed, by displaying the screen obtained while being executed the software application in the foreground on the display. The screen displayed on the display may be configured with at least one activity. The activity may indicate a component related to at least one task in the operating system (e.g., Android operating system) of the electronic device 101. While executing the software application, the electronic device 101 may define or use one or more activities. In case of executing the software application based on a foreground state, the electronic device may preferentially process the execution of the software application among a plurality of software applications stored in the memory.

For example, in a background state (or service), the electronic device 101 may at least temporarily refrain from displaying a screen related to the software application on the display while executing the software application. The electronic device 101 may execute the software application independently of the user's recognition in the background state (or service).

For example, the display group 230 and the virtual display group 231 may include a logical display group. The logical display may include information about resolution, density (e.g., pixel density), and/or refresh rate suitable for the electronic device 101.

For example, the electronic device 101 may select a group to be enabled by using the power manager service 229, among the display group 230 and the virtual display group 231. For example, the electronic device 101 may maintain the execution of the software application in the foreground based on another group, even though at least one group is disable, by distinguishing the display group 230 and the virtual display group 231 to be managed through the power manager service 229. An operation in which the electronic device 101 selects the group will be described later with reference to FIGS. 3 to 4.

The electronic device 101 according to an embodiment may display at least one media content of the first software application 223 on the display 240. The electronic device 101 may display at least one media content on the display 240, by controlling the display group 230. The electronic device 101 may at least temporarily store data about a screen obtained based on the execution of the first software application 223 in a first buffer area 232. The first buffer area 232 may indicate a frame buffer of a driver related to the display and a memory area that is used (or occupied) at least temporarily before data is transmitted to the display 240. The first buffer area 232 may be a buffer area interlocked with a surface flinger 265. For example, the electronic device 101 may at least temporarily occupy the data in the first buffer area 232 related to the display 240, by interlocking with the driver related to the display 240, by using the surface flinger 265. The surface flinger 265 may be used to manage at least one screen. The surface flinger 265 may be used to adjust the position, display order, and/or color of the at least one screen.

The electronic device 101 according to an embodiment may control the virtual display group 231 in the power manager service 229 based on the execution of the virtual display controller 227. For example, the electronic device 101 may process data (or tasks) on the screen obtained based on the execution of the first software application 223 through the virtual display 235, by driving hardware and/or software included in the virtual display group 231 by using the power manager service 229. The electronic device 101 may process the data through the virtual display 235 and may temporarily cease (or refrain) performing rendering on the screen.

For example, the electronic device 101 may store the data in the second buffer area 233 corresponding to the virtual display 235 among the first buffer area 232 and the second buffer area 233 to process the data through the virtual display 235. The second buffer area 233 may indicate an area in which the electronic device 101 stores the data at least temporarily in order to process the data through the virtual display 235. The second buffer area 233 may be an area distinct from the first buffer area 232 related to the display 240 among the memory area related to the surface flinger 265.

For example, the electronic device 101 may disable the display group 230 while enabling the virtual display group 231 to store the data in the second buffer area 233 through the power manager service 229. Since the display group 230 is disabled, the electronic device 101 may disable driving of the display 240. The electronic device 101 may enter the low power state based on disabling driving of the display 240. The electronic device may at least temporarily cease performing an operation corresponding to an input received through the display 240 based on the low power state (or while disabling the display).

For example, a state in which the electronic device 101 disables driving of the display 240 may include a doze mode. The doze mode may include a mode displaying at least one screen on the display 240 by at least one processor, in the low power state. In doze mode, an electronic device may attempt to conserve battery by restricting access of application to network and intensive memory services. For example, while disabling the display, the electronic device 101 may not perform processing on at least some of the inputs identified through the TSP. However, it is not limited thereto. The electronic device 101 may enable the display based on identifying a specified input (e.g., double tap) through the TSP.

The electronic device 101 according to an embodiment may change a group for processing data about the execution screen of the software application from the display group 230 to the virtual display group 231 based on the execution of the virtual display controller 227. The virtual display controller 227 may change a group for processing data for the execution screen of the software application to the virtual display group 231, by using an API (e.g., move to display API) having an identification factor (e.g., task id) for the data and an identification factor (e.g., destination display group id) for the available display group in the electronic device 101. For example, the virtual display controller 227 may cause the electronic device 101 to process a task on an execution screen of the software application among one or more tasks performed in the electronic device 101, using the virtual display group 231.

The electronic device 101 according to an embodiment may disable the display group 230 while processing the data about the execution screen of the software application based on the virtual display group 231. The electronic device 101 may process the data about the execution screen based on the virtual display group 231 in a state of enabling the virtual power group 263 distinct from the default power group 262. For example, the electronic device 101 may switch the display group 230 to a sleep state (or the low power state). The electronic device 101 may control the default power group 262 related to the display group 230 in order to switch the display group 230 to the sleep state. Since the electronic device 101 switches the display group 230 to the sleep state, the electronic device 101 may display a screen (e.g., the AOD screen, the always on display screen) related to the sleep state on the display 240.

As described above, the electronic device 101 according to an embodiment may process the data about the screen by using the display 240 or the virtual display 235. The electronic device 101 may display the screen obtained based on the execution of the first software application 223 on the display 240. The electronic device 101 may maintain the execution of the first software application 223 in the foreground based on displaying the screen on the display 240. While maintaining the execution of the first software application 223 in the foreground, the electronic device 101 may receive an input for at least temporarily masking the screen displayed on the display 240. The input may include an input for turning off the display 240. In response to the input, the electronic device 101 may at least temporarily store the data about the screen in the second buffer area 233 corresponding to the virtual display 235 while not displaying the screen on the display 240. The electronic device 101 may maintain the execution of the first software application 223 in the foreground based on at least temporarily processing the data through the virtual display 235. The electronic device 101 may maintain the execution of the first software application 223 through the virtual display group 231, in an idle state of the display group 230.

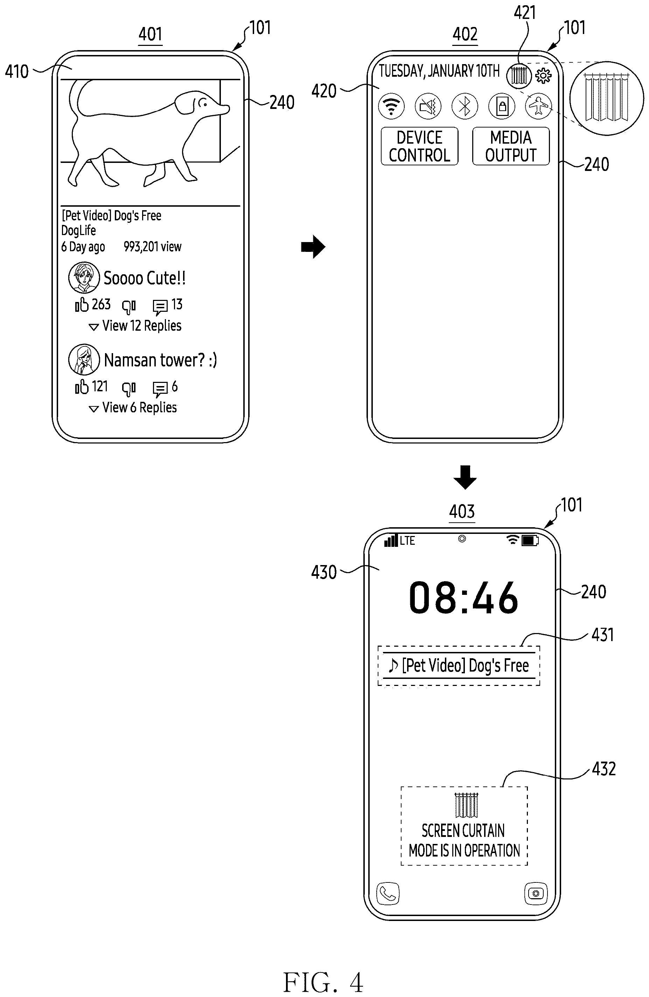

FIG. 3 illustrates an example of a flowchart indicating an operation of an electronic device according to an embodiment. FIG. 4 illustrates an example of an operation in which an electronic device executes a software application in a foreground state according to an embodiment. An electronic device 101 of FIGS. 3 and 4 may include an electronic device 101 of FIG. 1. At least one of operations of FIG. 3 may be performed by the electronic device 101 of FIG. 1 and/or a processor 210 of FIG. 2. Each of the operations of FIG. 3 may be performed in sequence, but is not necessarily performed in sequence. For example, an order of each of the operations may be changed, and at least two operations may be performed in parallel.

Referring to FIG. 3, in operation 310, the electronic device according to an embodiment may allocate a first buffer area of memory to the software application based on execution of the software application. The software application may be referred to a first software application 223 of FIG. 2. Allocating the first buffer area to the software application may include setting the electronic device to at least temporarily store data (e.g., data about a screen) obtained based on the execution of the software application in the first buffer area. The first buffer area may be referred to a first buffer area 232 of FIG. 2.

Referring to FIG. 3, in operation 320, the electronic device according to an embodiment may display a screen obtained using the software application on a display corresponding to the first buffer area through the first buffer area. The electronic device may display the screen on the display (e.g., a display 240 of FIG. 2) while maintaining the execution of the software application in the foreground state.

Referring to FIG. 4, in a state 401, the electronic device 101 according to an embodiment may display a screen 410 obtained based on execution of a first software application (e.g., the first software application 223 of FIG. 2) on the display 240. The electronic device 101 may allocate the first buffer area to the first software application. The electronic device 101 may store data related to the screen obtained based on the execution of the first software application, in the first buffer area. The electronic device 101 may display the screen 410, by controlling the display 240 based on processing (or rendering) the data stored in the first buffer area.

Referring to FIG. 3, in operation 330, while displaying the screen, the electronic device according to an embodiment may obtain an input for executing the software application based on a second state distinct from a first state for displaying the screen on the display. For example, the input for executing the software application based on the second state may include an input for turning off the display. For example, the input for executing the software application based on the second state may include an input for an icon in screen provided by a system UI (e.g., a system UI 222 of FIG. 2). The second state may be referred to as a low power state, a curtain mode, and/or a screen curtain mode.

Referring to FIG. 4, in a state 402, the electronic device 101 according to an embodiment may display the screen 420 provided by the system UI (e.g., the system UI 222 of FIG. 2) on the display 240. The electronic device 101 may enter the state 402 based on a swipe input having a specified direction in a specified area in the state 401. The screen 420 may be used for the user of the electronic device 101 to execute at least one function of the electronic device 101 more quickly (or conveniently). The screen 420 may be referred to as a quick panel. The screen 420 may include at least one icon indicating at least one function.

For example, the electronic device 101 may receive an input for an icon 421. The icon 421 may correspond to a function for at least temporarily masking the screen 410 provided by the software application being executed in the foreground.

Referring to FIG. 3, in operation 340, the electronic device according to an embodiment may allocate a second buffer area (e.g., a second buffer area 233) corresponding to a virtual display (e.g., a virtual display 235 of FIG. 2) among the first buffer area and the second buffer area, to the software application, in response to the input. Based on allocating the second buffer area to the software application, the electronic device may store data indicating the screen obtained based on the execution of the software application in the second buffer area. For example, the electronic device may perform processing of the data indicating the screen obtained based on the execution of the software application based on the input by using a virtual display group (e.g., a virtual display group 231 of FIG. 2). In order to perform processing of the data by using the virtual display group, the electronic device may allocate the software application to the second buffer area corresponding to the virtual display group by using a surface flinger (e.g., a surface flinger 265 of FIG. 2) for allocating a buffer area in the memory by interlocking with a driver (e.g., a driver related to the display) to perform data processing. However, it is not limited thereto.

Referring to FIG. 3, in operation 350, the electronic device according to an embodiment may maintain the execution of the software application by using the second buffer area. For example, the electronic device may output a screen corresponding to the data through the virtual display based on processing data stored in the second buffer area. Since the outputted screen is outputted through the virtual display, it may not be visible to the user. Although the outputted screen is not visible to the user, the electronic device may maintain the execution of the software application.

For example, the electronic device 101 may at least temporarily disable a display group (e.g., a display group 230 of FIG. 2) by controlling a power manager service (e.g., a power manager service 229 of FIG. 2) based on storing the data indicating the screen in the second buffer area. Based on disabling the display group, since processing of a task using the display group is temporarily ceased, the electronic device 101 may turn off the display 240. However, it is not limited thereto.

Referring to FIG. 4, in a state 403, the electronic device 101 according to an embodiment may disable the display 240. The electronic device 101 may turn off the display 240 in response to an input to the icon 421. However, it is not limited thereto. In response to the input to the icon 421, the electronic device 101 may adjust intensity of power to be transmitted to the display 240 to a second voltage having a voltage lower than a first voltage. The electronic device 101 may enter the low power state with respect to the display 240, based on transmitting power having the second voltage to the display 240. The electronic device 101 may display a screen 430, based on transmitting the power having the second voltage to the display 240. The screen 430 may include an image having a specified color (e.g., black). The screen 430 may include a text object indicating time. The screen 430 may include information (or limited information) about the software application being executed in the foreground state. For example, the information may include information about a package name of the software application and an operation state of the software application. In case that the software application is a software application that provides media content, the screen 430 may include a text object 431 (e.g., a title of the media content) indicating the media content being played. The text object 431 may indicate the execution of the software application. The screen 430 may include a text object 432 indicating information about the second state. The screen 430 may be referred to as an always on display (AOD) screen (or a black image), in terms of being displayed on the display 240 based on the low power state. For example, the AOD screen may be provided by another processor (e.g., display driver integrated circuit (DDI), which is distinct from the processor 210 of the electronic device 101, but is not limited thereto. For example, the processor 210 of the electronic device 101 may display the screen 430 on the display while maintaining the execution of the software application in an enabling state. For example, the processor 210 may provide information about the screen 430 including text objects 431 and 432 to the other processor. An area of memory accessible to the other processor may be a memory area distinct from the second buffer area.

As described above, the electronic device 101 according to an embodiment may receive an input for initiating a specified mode (e.g., a curtain mode) while displaying the screen 410 obtained based on the execution of the software application on the display 240. The electronic device 101 may process data about the screen 410 through the virtual display based on receiving the input. The electronic device 101 may disable the display 240 while processing data through the virtual display. The electronic device 101 may reduce power consumption of a battery based on disabling the display 240. The electronic device 101 may provide the user with an effect such as executing the software application by using a background service to the user, while executing a software application that does not provide background services in the foreground, based on processing the data through the virtual display.

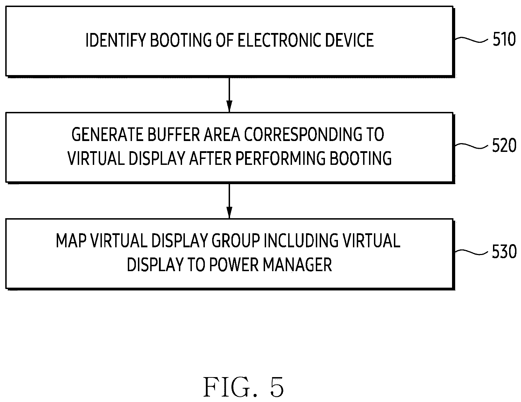

Hereinafter, an operation in which the electronic device generates the second buffer area corresponding to the virtual display will be described later with reference to FIG. 5.

FIG. 5 illustrates an example of a flowchart indicating an operation in which an electronic device sets a buffer area corresponding to a virtual display according to an embodiment. An electronic device 101 of FIG. 5 may include an electronic device 101 of FIG. 1. At least one of operations of FIG. 5 may be performed by the electronic device 101 of FIG. 1 and/or a processor 210 of FIG. 2. Each of the operations of FIG. 5 may be performed in sequence, but is not necessarily performed in sequence. For example, an order of each of the operations may be changed, and at least two operations may be performed in parallel.

Referring to FIG. 5, in operation 510, a processor according to an embodiment may identify booting of the electronic device. The processor may initiate a system service based on identifying the booting.

Referring to FIG. 5, in operation 520, the processor according to an embodiment may generate the buffer area corresponding to the virtual display after performing the booting. Based on performing the booting, the processor may generate the virtual display at the timing of initiating the system service based on performing the booting. The processor may generate (or allocate) a virtual display group (e.g., a virtual display group 231 of FIG. 2) for the virtual display. The processor may allocate a virtual power group (e.g., a virtual power group 263 of FIG. 2) in a power manager service to the virtual display, based on performing the booting up the electronic device. Based on generating the virtual display, the processor may generate (or allocate) a buffer area (e.g., a second buffer area 233 of FIG. 2) for storing data to be processed through the virtual display.

Referring to FIG. 5, in operation 530, the processor according to an embodiment may map a virtual display group including the virtual display to the power manager service. The processor may map a group (e.g., a virtual power group 263) in the power manager service (e.g., a power manager service 229 of FIG. 2) with the virtual display group. For example, the processor may dispose (or match) the virtual display group (e.g., the virtual display group 231 of FIG. 2) in at least one group among a plurality of power groups (e.g., a default power group 262 and virtual power group 263 of FIG. 2) to be managed through the power manager service. However, it is not limited thereto. The processor may process at least a portion of a task that has been processed using the display group by using the virtual display, by enabling the virtual display group while disabling a display group (e.g., a display group 230 of FIG. 2).

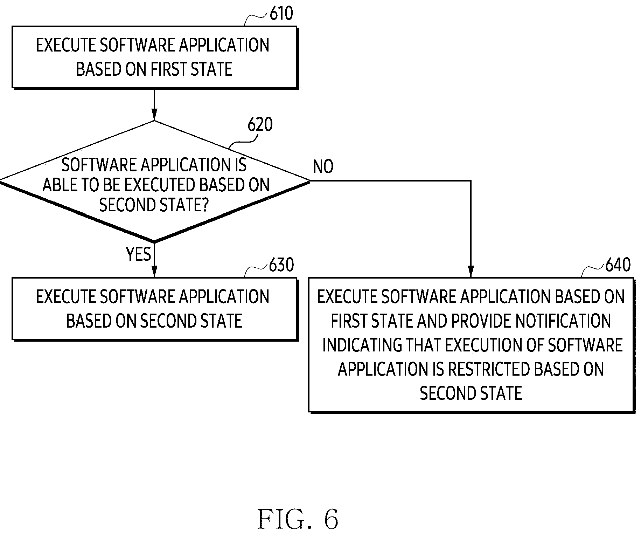

Hereinafter, an example of an operation in which the electronic device identifies a software application that generates data that may be stored in the second buffer area will be described later with reference to FIG. 6.

FIG. 6 illustrates an example of a flowchart indicating an operation of an electronic device according to an embodiment. An electronic device 101 of FIG. 6 may include an electronic device 101 of FIG. 1. At least one of operations of FIG. 6 may be performed by the electronic device 101 of FIG. 1 and/or a processor 210 of FIG. 2. Each of the operations of FIG. 6 may be performed in sequence, but is not necessarily performed in sequence. For example, an order of each of the operations may be changed, and at least two operations may be performed in parallel.

Referring to FIG. 6, in operation 610, a processor according to an embodiment may execute a software application based on a first state. Based on executing the software application based on the first state, a screen (e.g., a screen 410 of FIG. 4) provided by the software application may be displayed on the display. While executing the software application based on the first state, the processor may at least temporarily store data about the screen provided by the software application in a first buffer area corresponding to the display (e.g., a display 240 of FIG. 2).

Referring to FIG. 6, in operation 620, the processor according to an embodiment may identify whether the software application may be executed based on the second state. The second state may include a state of storing the screen provided by the software application in a second buffer area corresponding to a virtual display. The second state may include a state of at least temporarily ceasing displaying the screen provided by the software application on the display (e.g., the display 240 of FIG. 2).

Referring to FIG. 6, in case that the software application may be executed based on the second state (operation 620-Yes), in operation 630, the processor according to an embodiment may execute the software application based on the second state. For example, in case that the processor processes a task for displaying the screen of the software application based on a wake lock, executing of the software application may be performed based on the second state. The wake lock may mean that the processor set to maintain the display of the screen by controlling the display. However, it is not limited thereto.

For example, in case that the processor displays the screen of the software application for a specified time based on the wake lock, the processor may execute the software application based on switching to the second state after the specified time expires. For example, the processor may provide a notification for guiding the switching to the second state in case of displaying the screen of the software application for the specified time. However, it is not limited thereto.

For example, based on executing the software application based on the second state, the processor may store (or allocate) data (or a task) related to the execution of the software application in the second buffer area among the first buffer area and the second buffer area. The processor may process data stored in the second buffer area through the virtual display. The processor may process the data through the virtual display, by bypassing rendering the screen by using data.

Referring to FIG. 6, in case that the software application may not be executed based on the second state (operation 620-No), in operation 640, the processor according to an embodiment may execute the software application based on the first state and may provide a notification indicating that the execution of the software application is restricted based on the second state. Based on the second state, the processor may display the notification indicating that the execution of the software application is restricted on the display based on the text object form. The processor may output an audio signal indicating the notification through a speaker. However, it is not limited thereto.

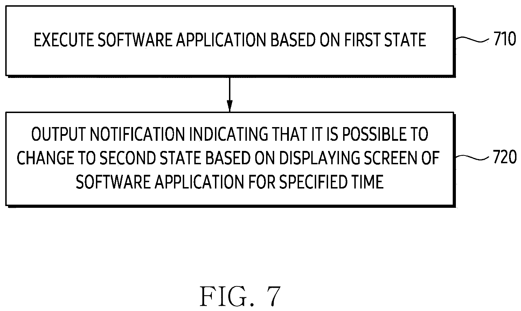

Hereinafter, an example of an operation of providing a notification for guiding the execution of the software application based on the second state to the user to reduce current consumption of a battery while the electronic device executes the software application based on the first state will be described later with reference to FIG. 7.

FIG. 7 illustrates an example of a flowchart indicating an operation of providing a notification for an electronic device to enter a second state according to an embodiment. An electronic device 101 of FIG. 7 may include an electronic device 101 of FIG. 1. At least one of operations of FIG. 7 may be performed by the electronic device 101 of FIG. 1 and/or a processor 210 of FIG. 2. Each of the operations of FIG. 7 may be performed in sequence, but is not necessarily performed in sequence. For example, an order of each of the operations may be changed, and at least two operations may be performed in parallel.

Referring to FIG. 7, in operation 710, a processor according to an embodiment may execute a software application based on a first state. The operation 710 may correspond to operation 610.

For example, the processor may determine whether the software application may be executed based on the second state. An operation of determining whether it may be executed based on the second state may be referred to operation 620 of FIG. 6.

Referring to FIG. 7, in operation 720, the processor according to an embodiment may output a notification indicating that it is possible to change to the second state based on displaying a screen of the software application for a specified time. The processor may output a notification for obtaining (or guiding) an input based on maintaining the execution of the software application without receiving the input (e.g., a user input) for the specified time. The specified time may include a timing at which brightness of the screen is switched to threshold brightness. For example, in case that the software application is executed based on a wake lock without receiving the user input (or automatically) for the specified time, the processor may output the notification after the specified time has expired. The user input may include gaze information of the user identified through the camera.

For example, the processor may bypass outputting the notification based on executing the software application without receiving the user input for the specified time and may maintain the execution of the software application based on the second state.

For example, the processor may output the notification guiding to process data about the screen through the virtual display 235 in order to reduce power consumption of a battery while displaying the screen of the software application on a display (e.g., a display 240 of FIG. 2) based on the wake lock. A first power consumed by the processor to perform an operation of processing the data through the virtual display may be less than a second power consumed to display the screen on the display (e.g., the display 240 of FIG. 2). The processor may extend the usage time of the electronic device by receiving an input indicating entering the second state based on outputting the notification.

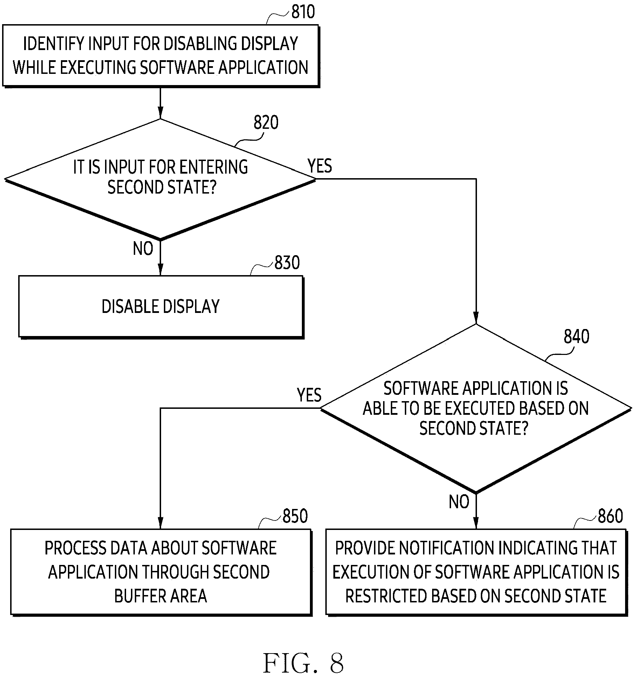

FIG. 8 illustrates an example of a flowchart indicating an operation of an electronic device according to an embodiment. An electronic device 101 of FIG. 8 may include an electronic device 101 of FIG. 1. At least one of operations of FIG. 8 may be performed by the electronic device 101 of FIG. 1 and/or a processor 210 of FIG. 2. Each of the operations of FIG. 8 may be performed in sequence, but is not necessarily performed in sequence. For example, an order of each of the operations may be changed, and at least two operations may be performed in parallel.

Referring to FIG. 8, in operation 810, a processor according to an embodiment may identify an input for disabling a display while executing a software application. The processor may identify the input while executing the software application based on a first state. The processor may identify the input while displaying a screen provided from the software application on the display (e.g., a display 240 of FIG. 2).

Referring to FIG. 8, in operation 820, the processor according to an embodiment may identify whether it is an input for entering the second state. The processor may identify whether the input for disabling the display is the input for entering the second state. For example, based on identifying an input for an icon 421 of FIG. 4, the processor may identify the input for entering the second state. In response to an input for a physical button for disabling the display, the processor may identify that it is not the input for entering the second state. However, it is not limited thereto.

Referring to FIG. 8, in case that it is not the input for entering the second state (operation 820-No), in operation 830, the processor according to an embodiment may disable the display. For example, the processor may disable the display based on entering a disabling state. The disabling state may include a lock state, a standby state, or a low power state. In the disabling state of the processor, another processor (e.g., DDI) distinct from the processor may display an AOD screen on the display. In case that a software application that does not provide a background service is being executed, the execution of the software application may be at least temporarily ceased (or terminated) based on the processor entering the disabling state. However, it is not limited thereto.

Referring to FIG. 8, in case that it is the input for entering the second state (operation 820-Yes), in operation 840, the processor according to an embodiment may identify whether the software application may be executed based on the second state. The operation 840 may be referred to operation 620.

Referring to FIG. 8, in case that the software application may be executed based on the second state (operation 840-Yes), in operation 850, the processor according to an embodiment may process data about the software application through a second buffer area. The operation 850 may be referred to operation 630. The processor may at least temporarily store the data in the second buffer area in order to execute the software application based on the second state. Based on allocating the software application to the second buffer area, while maintaining the execution of the software application, the display (e.g., the display 240 of FIG. 2) may be controlled based on a second voltage smaller than a first voltage corresponding to the first state for displaying a screen of the software application.

For example, after allocating the first buffer area to the software application, the processor may allocate the second buffer area to the software application in case of identifying the input for executing the software application based on the second state. In case of changing the area for storing data provided by the software application, the execution of the software application may be reset (or re-executed). The processor may omit the operation of resetting (or terminating and executing) the execution of the software application by identifying information about the second state (e.g., a curtain mode) and a virtual display (e.g., a virtual display 235 of FIG. 2) corresponding to the second buffer area in order to maintain the execution of the software application.

The processor according to an embodiment may disable the display (e.g., the display 240 of FIG. 2) while storing data related to the execution of the software application in the second buffer area based on the second state. The processor may at least temporarily cease transmitting power to a display group (e.g., a display group 230 of FIG. 2) related to the display in order to disable the display. Since the display group related to the display and the group of the virtual display related to the virtual display are divided, in case of at least temporarily ceasing the transmission of the power to the display group, the processor may maintain the execution of the software application through the virtual display. The processor according to an embodiment may at least temporarily disable the display group (e.g., the display group 230 of FIG. 2) related to the display by controlling a power manager service in order to disable the display. Since the display group related to the display and a virtual display group related to the virtual display are divided, in case that the display group is temporarily disabled (or switched to an idle state), the processor may maintain the execution of the software application through the virtual display.

The processor according to an embodiment may allocate the first buffer area among the first buffer area and the second buffer area to the software application based on identifying a specified input (e.g., double tap) while maintaining the execution of the software application by using the second buffer area. The processor may store the data related to the execution of the software application in the allocated first buffer area. Based on storing the data, the processor may display a screen related to the execution of the software application on the display. The specified input may include an input for enabling the display (e.g., the display 240 of FIG. 2).

Referring to FIG. 8, in case that the software application may not be executed based on the second state (operation 840-No), in operation 860, the processor according to an embodiment may provide a notification indicating that the execution of the software application is restricted based on the second state.

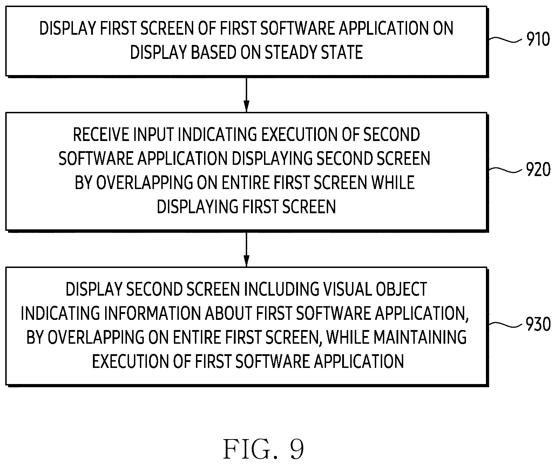

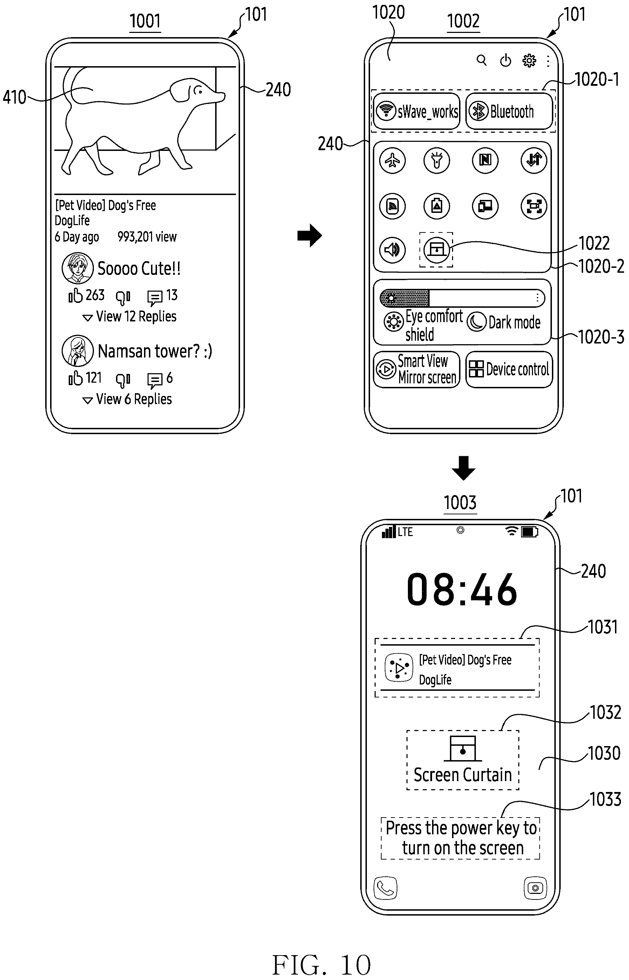

Hereinafter, an example of an operation of displaying another image layer superimposed on the entire screen based on the execution of at least one software application while the electronic device displays the screen of the software application will be described later with reference to FIGS. 9 and 10.

FIG. 9 illustrates an example of a flowchart indicating an operation of an electronic device according to an embodiment. FIG. 10 illustrates an example of an operation in which an electronic device displays another screen superimposed on a screen of a software application according to an embodiment. An electronic device 101 of FIGS. 9 and 10 may include an electronic device 101 of FIG. 1. At least one of operations of FIG. 9 may be performed by the electronic device 101 of FIG. 1 and/or a processor 210 of FIG. 2. Each of the operations of FIG. 9 may be performed in sequence, but is not necessarily performed in sequence. For example, an order of each of the operations may be changed, and at least two operations may be performed in parallel.

Referring to FIG. 9, in operation 910, an electronic device according to an embodiment may display a first screen of a first software application on a display based on a steady state. The steady state may include a state of displaying a screen based on execution of the first software application (e.g., a first software application 223 of FIG. 2) on the display (e.g., a display 240 of FIG. 2). The steady state may include an enabling state of the display.

Referring to FIG. 9, in operation 920, the electronic device according to an embodiment may receive an input indicating execution of a second software application displaying a second screen superimposed on the entire first screen while displaying the first screen. The second screen may be referred to as a service-based image layer in terms of displaying superimposed on the first screen. The image layer may be configured with view components such as a button, an image, a layout, a widget, text, and the like.

Referring to FIG. 10, in a state 1001, the electronic device 101 according to an embodiment may display a first screen 410 based on the execution of the first software application (e.g., the first software application 223 of FIG. 2). The state 1001 may be referred to a state 401. For example, the electronic device 101 may enter a state 1002 in response to an input (e.g., a swipe screen) for displaying a quick panel 1020 through a system UI (e.g., a system UI 222 of FIG. 2) while displaying the first screen 410. The quick panel 1020 may correspond to a screen 420 of FIG. 4.

Referring to FIG. 10, in the state 1002, the electronic device 101 according to an embodiment may identify an input for an icon 1022 in the quick panel 1020. The quick panel 1020 may include an area 1020-1 indicating a communication link being used by the electronic device 101, an area 1020-2 for disposing icons indicating functions that the electronic device 101 may perform, and/or an area 1020-3 for adjusting brightness of the display (e.g., the display 240 of FIG. 2). However, it is not limited thereto. The icon 1022 may correspond to at least one function (e.g., a curtain mode) and/or a second software application 224 of FIG. 2. The second software application 224 may include a software application set to change the display to a disabling state and at least temporarily cease performing an operation on an input through a TSP. The disabling state may include a low power state. In response to the input for the icon 1022, the electronic device 101 may call an API for entering a second state distinct from a first state for displaying the first screen 410. The second state may include a state for masking the screen 410 displayed on the display by using foreground. In order to mask the first screen 410, the electronic device 101 may display the second screen superimposed on the first screen 410.

Referring to FIG. 9, in operation 930, the electronic device according to an embodiment may display a second screen including a visual object indicating information about the first software application, by overlapping on the entire first screen, while maintaining the execution of the first software application. For example, the electronic device may preferentially perform processing of the first software application over processing the second software application. The electronic device 101 may execute the first software application in a foreground state and may execute the second software application in a background state. In terms of executing the second software application in the background state, the second screen may be obtained based on the service.

Referring to FIG. 10, in a state 1003, the electronic device 101 according to an embodiment may display a second screen 1030 on the display 240 in response to the input for the icon 1022. The second screen 1030 may be referred to as a screen curtain user interface (UI) in terms of being displayed by overlapping on the entire first screen 410. The second screen 1030 may be defined as an image having an application overlay type. The electronic device 101 may determine whether to display the first screen 410 through the second screen 1030 by using an alpha value (e.g., a parameter for adjusting transparency) for the second screen 1030. However, it is not limited thereto.

For example, the second screen 1030 may include a configuration similar to configuration included in a screen 430 of FIG. 4. The second screen 1030 may include an image having a specified color (e.g., black). The second screen 1030 may include a visual object 1031 (or a text object) indicating the execution of the first software application. The second screen 1030 may include a visual object 1032 (or a text object) indicating information about the second state. The second screen 1030 may include a text object 1033 for releasing the second state (or changing from the second state to the first state).

The electronic device 101 according to an embodiment may maintain the execution of the first software application in the foreground state based on displaying by overlapping the second screen 1030 on the entire first screen 410. For example, based on displaying the second screen 1030, the electronic device 101 may control the display 240 based on the low power state. The low power state may include a state in which the electronic device 101 controls the display 240 based on a second voltage that is lower than the first voltage for controlling the display 240 based on the steady state. The electronic device 101 may reduce the brightness of the display while controlling the display 240 based on the second voltage. For example, the electronic device 101 may not perform an operation on an input received through the TSP based on displaying the second screen 1030.

The electronic device 101 according to an embodiment may cease displaying the second screen 1030 based on receiving a specified input. The electronic device 101 may release the second state based on receiving the specified input. The electronic device 101 may change from the second state to the first state based on obtaining the specified input. The specified input may include an input for enabling the display 240. The specified input may include an input for a physical button for turning on the display 240. The specified input may include a plurality of touch inputs (e.g., double tap) and/or a long touch input for the display 240. However, it is not limited thereto.

After ceasing displaying the second screen 1030, the electronic device 101 according to an embodiment may display a screen overlapped by the second screen 1030 on the display 240. For example, since the electronic device 101 executes the first software application in the foreground state, the screen may be at least partially different from the first screen 410 included in the state 1001. However, it is not limited thereto.

As described above, the electronic device 101 according to an embodiment may execute the first software application in the foreground state by displaying the second screen 1030 superimposed on the first screen 410 independently of using a virtual display. The electronic device 101 may reduce power consumption of the battery by displaying the second screen 1030 through the display 240 based on the low power state. Based on displaying the second screen 1030 superimposed on the first screen 410, the electronic device 101 may provide an effect such that the first software application that does not provide the background service uses the background service to the user.

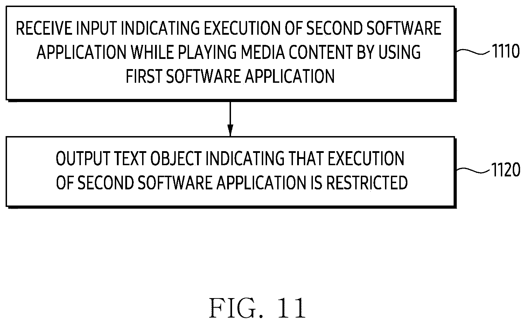

FIG. 11 illustrates an example of a flowchart indicating an operation in which an electronic device restricts execution of a second software application according to an embodiment. An electronic device 101 of FIG. 11 may include an electronic device 101 of FIG. 1. At least one of operations of FIG. 11 may be performed by the electronic device 101 of FIG. 1 and/or a processor 210 of FIG. 2. Each of the operations of FIG. 11 may be performed in sequence, but is not necessarily performed in sequence. For example, an order of each of the operations may be changed, and at least two operations may be performed in parallel.

Referring to FIG. 11, in operation 1110, a processor according to an embodiment may receive an input indicating the execution of the second software application while playing media content by using a first software application. The first software application may include a first software application 223 of FIG. 2. The second software application may include a second software application 224 of FIG. 2. The first software application may include a video software application that provides the media content. The processor may receive the input indicating the execution of the second software application while playing the media content by using the first software application in a foreground state. The input may include an input for an icon 1022 of FIG. 10.

Referring to FIG. 11, in operation 1120, the processor according to an embodiment may output a text object indicating that the execution of the second software application is restricted. For example, the first software application may be an example of a software application that provides a background service. Since the first software application provides the background service, the execution of the second software application may be limited. However, it is not limited thereto. The processor may output the text object based on displaying media content based on execution of the first software application on the display. The text object may be displayed on the display based on a toast message form. However, it is not limited thereto. The processor may refrain from initiating the execution of the second software application based on outputting the text object. However, it is not limited thereto.

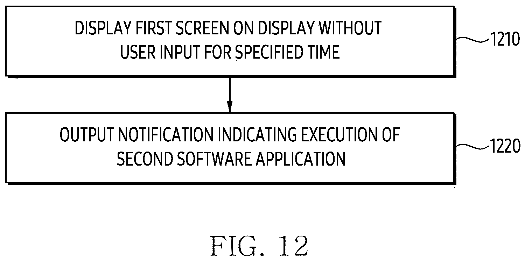

FIG. 12 illustrates an example of a flowchart indicating an operation in which an electronic device provides a notification indicating execution of a second software application according to an embodiment. An electronic device 101 of FIG. 12 may include an electronic device 101 of FIG. 1. At least one of operations of FIG. 12 may be performed by the electronic device 101 of FIG. 1 and/or a processor 210 of FIG. 2. Each of the operations of FIG. 12 may be performed in sequence, but is not necessarily performed in sequence. For example, an order of each of the operations may be changed, and at least two operations may be performed in parallel.

Referring to FIG. 12, in operation 1210, a processor according to an embodiment may display a first screen on a display without a user input for a specified time. For example, the processor may display the first screen based on execution of a first software application (e.g., a first software application 223 of FIG. 2). The specified time may include a time (e.g., a time for switching to dim) for adjusting brightness of the display (e.g., a display 240). In case that the processor fails to identify the user input for the specified time, the processor may enter a low power state. The processor may provide a notification indicating whether to execute the first software application based on a foreground state before entering the low power state.

Referring to FIG. 12, in operation 1220, the processor according to an embodiment may output the notification indicating the execution of the second software application. The notification indicating the execution of the second software application may include a notification recommending the execution of the second software application. The processor, independent of a wake lock, may output the notification in case that the user input is not received for the specified time while displaying a screen for the first software application. The notification may be displayed on the display based on a toast message format. However, it is not limited thereto.

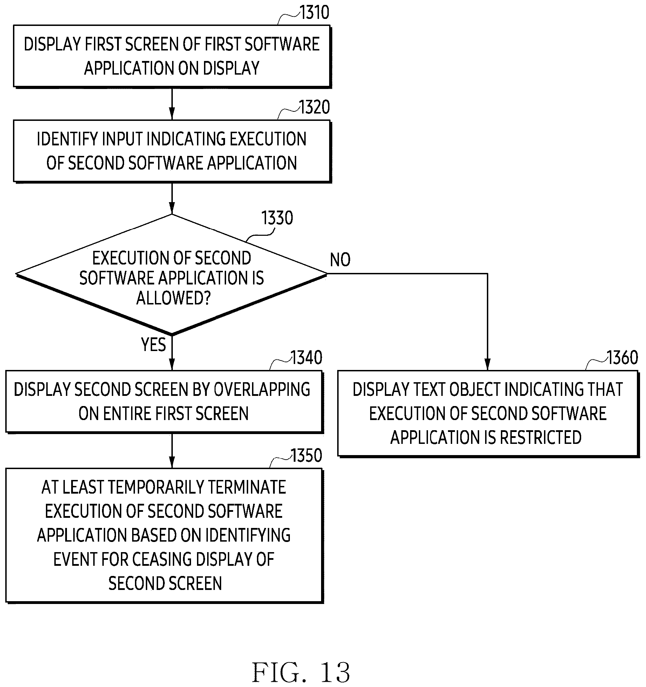

FIG. 13 illustrates an example of a flowchart indicating an operation of an electronic device according to an embodiment. An electronic device 101 of FIG. 13 may include an electronic device 101 of FIG. 1. At least one of operations of FIG. 13 may be performed by the electronic device 101 of FIG. 1 and/or a processor 210 of FIG. 2. Each of the operations of FIG. 13 may be performed in sequence, but is not necessarily performed in sequence. For example, an order of each of the operations may be changed, and at least two operations may be performed in parallel. At least one of the operations of FIG. 13 may be related to at least one of operations of FIG. 9.

Referring to FIG. 13, in operation 1310, a processor according to an embodiment may display a first screen of a first software application on a display. The operation 1310 may be referred to operation 910 of FIG. 9.

Referring to FIG. 13, in operation 1320, the processor according to an embodiment may identify an input indicating execution of a second software application. The operation 1320 may be referred to operation 920 of FIG. 9.

Referring to FIG. 13, in operation 1330, the processor according to an embodiment may identify whether the execution of the second software application is allowed. For example, whether the execution of the second software application is allowed may be determined based on whether the first software application being executed provides a background service. However, it is not limited thereto.

Referring to FIG. 13, in case that the execution of the second software application is allowed (operation 1330-Yes), in operation 1340, the processor according to an embodiment may display a second screen superimposed on the entire first screen. For example, the processor may change a state of the display to a low power state while displaying the second screen superimposed on the entire first screen. For example, in case that the first software application is a software application (e.g., a video software application) that provides media content, the execution of the second software application may be allowed while playing the media content. For example, in case that the processor processes a task for displaying the first screen of the first software application based on the wake lock, the execution of the second software application may be allowed, for masking the first screen. However, it is not limited thereto.

Referring to FIG. 13, in operation 1350, the processor according to an embodiment may at least temporarily terminate the execution of the second software application based on identifying an event for ceasing the display of the second screen. The processor may monitor the event while displaying the second screen. For example, the event may include an input for enabling the display. The event may include a case of identifying an incoming call. The event may include a case of identifying an input for pausing media content being played by using the first software application. The event may include a case of identifying an input calling an artificial intelligence (AI) service. Based on identifying the event, the processor may cease displaying the second screen and may display the first screen on the display.

Referring to FIG. 13, in case that the execution of the second software application is not allowed (operation 1330-No), in operation 1360, a text object indicating that the execution of the second software application is restricted may be displayed. The operation 1360 may be referred to operation 1120 of FIG. 11.

The electronic device according to an embodiment may execute the software application in a foreground state while ceasing displaying the screen of the software application on the display. There may be a need for a method for the electronic device to maintain the execution of the software application independently of the display of the screen.

An electronic device 101 according to an embodiment as described above may comprise a display 240, memory 220 for storing instructions, and at least one processor 210. The at least one processor, when the instructions are executed, may be configured to cause the electronic device to allocate a first buffer area 232 of the memory to the software application, based on execution of a software application 223. The at least one processor, when the instructions are executed, may be configured to cause the electronic device to display a screen 410 obtained using the software application on the display corresponding to the first buffer area through the first buffer area. The at least one processor, when the instructions are executed, may be configured to cause the electronic device to obtain a first input for executing the software application based on a second state distinct from a first state for displaying the screen on the display while displaying the screen. The at least one processor, when the instructions are executed, may be configured to cause the electronic device to allocate the second buffer area corresponding to a virtual display 235 among the first buffer area and the second buffer area 233 to the software application in response to the obtained first input. The at least one processor, when the instructions are executed, may be configured to cause the electronic device to maintain the execution of the software application by using the second buffer area.

For example, the at least one processor, when the instructions are executed, may be configured to cause the electronic device to preferentially process the execution of the software application among a plurality of software applications stored in the memory.

For example, the at least one processor, when the instructions are executed, may be configured to cause the electronic device to display the screen based on the first state while executing the software application. The at least one processor, when the instructions are executed, may be configured to cause the electronic device to output a notification for obtaining the first input based on maintaining the execution of the software application without receiving a second input distinct from the first input for a specified time.

For example, the at least one processor, when the instructions are executed, may be configured to cause the electronic device to disable the display while maintaining the execution of the software application by using the second buffer area in response to the first input for disabling the display.

For example, the at least one processor, when the instructions are executed, may be configured to cause the electronic device to at least temporarily cease performing an operation corresponding to a third input received while disabling the display.

For example, the at least one processor, when the instructions are executed, may be configured to cause the electronic device to control the display based on a second voltage smaller than a first voltage corresponding to the first state for displaying the screen while maintaining the execution of the software application based on allocating the software application to the second buffer area.

For example, the at least one processor, when the instructions are executed, may be configured to cause the electronic device to display another screen 430 indicating the second state on the display based on controlling the display by using the second voltage corresponding to the second state. The other screen may include at least one of a first text object 431 indicating the execution of the software application and a second text object 432 indicating the second state.

For example, the at least one processor, when the instructions are executed, may be configured to cause the electronic device to display the screen on the display based on at least temporarily storing data related to the screen in the first buffer area allowed to access the display, in the first state. The at least one processor, when the instructions are executed, may be configured to cause the electronic device to process the data through the virtual display based on at least temporarily storing the data in the second buffer area among the first buffer area and the second buffer area, in the second state.

For example, the at least one processor, when the instructions are executed, may be configured to cause the electronic device to identify a fourth input for displaying an icon 421 indicating the second state while displaying the screen obtained using the software application. The at least one processor, when the instructions are executed, may be configured to cause the electronic device to display the icon superimposed on at least a portion of the screen in response to the identified fourth input. The at least one processor, when the instructions are executed, may be configured to cause the electronic device to allocate the second buffer area to the virtual display based on obtaining the first input indicating selecting the icon.

For example, the at least one processor, when the instructions are executed, may be configured to cause the electronic device to allocate the first buffer area among the first buffer area and the second buffer area to the software application based on identifying a fifth input, while maintaining the execution of the software application by using the second buffer area. The at least one processor, when the instructions are executed, may be configured to cause the electronic device to display the screen related to the execution of the software application on the display through the allocated first buffer area.

In the method of the electronic device 101 according to the above-described embodiment, the method may include allocating the first buffer area 232 of the memory 220 to the software application based on the execution of the software application 223. The method may include displaying the screen 410 obtained using the software application on the display 240 corresponding to the first buffer area through the first buffer area. The method may include obtaining a first input for executing the software application based on the second state distinct from the first state for displaying the screen on the display while displaying the screen. The method may include allocating the second buffer area corresponding to the virtual display 235 among the first buffer area and the second buffer area 233 to the software application in response to the obtained first input. The method may include maintaining the execution of the software application by using the second buffer area.

For example, maintaining the execution may include preferentially processing the execution of the software application among a plurality of software applications stored in the memory.

For example, displaying the screen may include displaying the screen based on the first state while executing the software application. Displaying the screen may include outputting a notification for obtaining the first input based on maintaining the execution of the software application without receiving a second input distinct from the first input for a specified time.

For example, maintaining the execution may include disabling the display, while maintaining the execution of the software application by using the second buffer area, in response to the first input for disabling the display.

For example, disabling the display may include at least temporarily ceasing performing an operation corresponding to a third input received while disabling the display.

An electronic device 101 according to an embodiment as described above may comprise a display 240, memory 220 for storing instructions, and at least one processor 210. The at least one processor, when the instructions are executed, may be configured to cause the electronic device to display a first screen 410 of a first software application 223 on the display based on a steady state. The at least one processor, when the instructions are executed, may be configured to cause the electronic device to receive an input indicating execution of a second software application 224 displaying the second screen 1030 superimposed on the entire first screen while displaying the first screen. The at least one processor, when the instructions are executed, may be configured to cause the electronic device to display superimposed the second screen including a visual object 1031 indicating information about the first software application on the entire first screen while maintaining the execution of the first software application in response to the received input. The at least one processor, when the instructions are executed, may be configured to cause the electronic device to preferentially perform processing on the first software application over processing on the second software application.

For example, the at least one processor, when the instructions are executed, may be configured to cause the electronic device to change the state of the display to the low power state, based on the execution of the second software application that changes the state of the display from the steady state to the low power state for controlling the display based on the second voltage smaller than the first voltage while executing the first software application in the steady state for controlling the display based on the first voltage. The at least one processor, when the instructions are executed, may be configured to cause the electronic device to display the second screen superimposed on the entire first screen based on the second voltage, in the low power state.

For example, the at least one processor, when the instructions are executed, may be configured to cause the electronic device to reduce brightness of the display while controlling the display based on the second voltage.

For example, the at least one processor, when the instructions are executed, may be configured to cause the electronic device to identify another input distinct from the input through the display after displaying the second screen. The at least one processor, when the instructions are executed, may be configured to cause the electronic device to at least temporarily cease performing an operation corresponding to the other input.

For example, the at least one processor, when the instructions are executed, may be configured to cause the electronic device to output a notification indicating the execution of the second software application based on displaying the first screen on the display for a specified time.

For example, the at least one processor, when the instructions are executed, may be configured to cause the electronic device to display the first screen indicating the media content in case of playing the media content by using the first software application. The at least one processor, when the instructions are executed, may be configured to cause the electronic device to display a text object indicating whether to execute the second software application on the display, in response to the input indicating the execution of the second software application while playing the media content.

For example, the at least one processor, when the instructions are executed, may be configured to cause the electronic device to display the visual object indicating other information about the media content on the display after executing the second software application by using the text object.

For example, the at least one processor, when the instructions are executed, may be configured to cause the electronic device to identify an event for ceasing the display of the second screen. The at least one processor, when the instructions are executed, may be configured to cause the electronic device to terminate the execution of the second software application based on identifying the event. The at least one processor, when the instructions are executed, may be configured to cause the electronic device to display the first screen on the display.

For example, the at least one processor, when the instructions are executed, may be configured to cause the electronic device to display the first screen on the display.

A computer readable storage medium storing one or more programs according to an embodiment as described above, wherein the one or more programs, when being executed by the processor 210 of the electronic device 101, may be configured to cause the electronic device to display the first screen 410 of the first software application 223 on the display based on the steady state. The one or more programs, when being executed by the processor of the electronic device, may be configured to cause the electronic device to receive an input indicating the execution of the second software application 224 displaying the second screen 1030 superimposed the entire first screen, while displaying the first screen. The one or more programs, when being executed by the processor of the electronic device, may be configured to cause the electronic device to display the second screen including a visual object 1031 indicating information about the first software application superimposed on the entire first screen, while maintaining the execution of the first software application, in response to the received input. The one or more programs, when being executed by the processor of the electronic device, may be configured to cause the electronic device to preferentially perform processing on the first software application over processing on the second software application.

For example, the one or more programs, when being executed by the processor of the electronic device, may be configured to cause the electronic device to change the state of the display to the low power state, based on the execution of the second software application that changes the state of the display from the steady state to the low power state for controlling the display based on the second voltage smaller than the first voltage while executing the first software application in the steady state for controlling the display based on the first voltage. The one or more programs, when being executed by the processor of the electronic device, may be configured to cause the electronic device to display the second screen superimposed on the entire first screen based on the second voltage in the low power state.

For example, the one or more programs, when being executed by the processor of the electronic device, may be configured to cause the electronic device to reduce the brightness of the display while controlling the display based on the second voltage.

For example, the one or more programs, when being executed by the processor of the electronic device, may be configured to cause the electronic device to identify another input distinct from the input through the display after displaying the second screen. The one or more programs, when being executed by the processor of the electronic device, may be configured to cause the electronic device to at least temporarily cease performing an operation corresponding to the other input.

A computer readable storage medium storing one or more programs according to an embodiment as described above, wherein the one or more programs, when being executed by the processor 210 of the electronic device 101, may be configured to cause the electronic device to allocate a first buffer area 232 of the memory 220 to the software application based on the execution of the software application 223. The one or more programs, when being executed by the processor of the electronic device, may be configured to cause the electronic device to display the screen 410 obtained using the software application on the display 240 corresponding to the first buffer area through the first buffer area. The one or more programs, when being executed by the processor of the electronic device, may be configured to cause the electronic device to obtain a first input for executing the software application based on the second state distinct from the first state for displaying the screen on the display while displaying the screen. The one or more programs, when being executed by the processor of the electronic device, may be configured to cause the electronic device to allocate the second buffer area corresponding to the virtual display 235 among the first buffer area and the second buffer area 233 to the software application in response to the obtained first input. The one or more programs, when being executed by the processor of the electronic device, may be configured to cause the electronic device to maintain the execution of the software application by using the second buffer area.

For example, the one or more programs, when being executed by the processor of the electronic device, may be configured to cause the electronic device to preferentially process the execution of the software application among a plurality of software applications stored in the memory.

An electronic device according to an embodiment as described above may comprise a display, a processor, and memory for storing instructions. The instructions, when executed by the processor, may be configured to cause the electronic device to allocate a first buffer area to a software application being executed in foreground. The instructions, when executed by the processor, may be configured to cause the electronic device to display, on the display, an execution screen of the software application, being executed in foreground, corresponding to data in the first buffer area. The instructions, when executed by the processor, may be configured to cause the electronic device to, while displaying the execution screen on the display, obtain a first input. The instructions, when executed by the processor, may be configured to cause the electronic device to, based on the first input, allocate a second buffer area corresponding to a virtual display among the first buffer area and the second buffer area to the software application, and maintain the execution of the software application using the second buffer area. While the second buffer area is allocated, the execution screen of the software application may not be displayed on the display.

For example, the instructions, when executed by the processor, may be configured to cause the electronic device to, while the first buffer area is allocated to the software application, display, on the display, the execution screen of the software application based on at least temporarily storing data related to the execution screen in the first buffer area to which access of the display is permitted, in a first state. The instructions, when executed by the processor, may be configured to cause the electronic device to, while the second buffer area is allocated to the software application, process data through the virtual display based on at least temporarily storing the data to be processed through the virtual display in the second buffer area, in a second state.

For example, the instructions, when executed by the processor, may be configured to cause the electronic device to, while the second buffer area is allocated to the software application and the execution screen of the software application is not being displayed on the display, preferentially process the execution of the software application among a plurality of software applications stored in the memory.

For example, the instructions, when executed by the processor, may be configured to cause the electronic device to display the execution screen based on the first state while executing the software application. The instructions, when executed by the processor, may be configured to cause the electronic device to output a notification for obtaining the first input, based on maintaining execution of the software application without receiving a second input distinct from the first input for a specified time.

For example, the instructions, when executed by the processor, may be configured to cause the electronic device to display the execution screen based on the first state while executing the software application. The instructions, when executed by the processor, may be configured to cause the electronic device to change a state of the electronic device to the second state from the first state, based on maintaining execution of the software application for a specified time.

For example, the electronic device may further comprise a camera. The instructions, when executed by the processor, may be configured to cause the electronic device to display the execution screen based on the first state while executing the software application. The instructions, when executed by the processor, may be configured to cause the electronic device to at least temporarily cease to change a state of the electronic device to the second state from the first state while identifying a user of the electronic device by using the camera.

For example, the instructions, when executed by the processor, may be configured to cause the electronic device to at least temporarily cease to perform an operation corresponding to the third input received through the display in the second state.

For example, the instructions, when executed by the processor, may be configured to cause the electronic device to control the display based on a second voltage less than a first voltage corresponding to the first state for displaying the screen while maintaining the execution of the software application, based on allocating the software application to the second buffer area.

For example, the instructions, when executed by the processor, may be configured to cause the electronic device to, in the second state, disable a first group and able a second group, among the first group related to the display and the second group related to the virtual display. The instructions, when executed by the processor, may be configured to cause the electronic device to maintain the execution of the software application, in the second state in which the second group is enabled.

For example, the instructions, when executed by the processor, may be configured to cause the electronic device to identify a fourth input for displaying an icon indicating the second state while displaying the execution screen obtained using the software application. The instructions, when executed by the processor, may be configured to cause the electronic device to display the icon overlapping at least a portion of the execution screen in response to the identified fourth input. The instructions, when executed by the processor, may be configured to cause the electronic device to allocate the second buffer area to the virtual display based on obtaining the first input indicating a selection of the icon.

In a computer-readable storage medium storing one or more programs according to an embodiment as described above, the one or more programs, when executed by the electronic device, may be configured to cause the electronic device to allocate a first buffer area to a software application being executed in foreground. The one or more programs, when executed by the electronic device, may be configured to cause the electronic device to display, on the display, an execution screen of the software application, being executed in foreground, corresponding to data in the first buffer area. The one or more programs, when executed by the electronic device, may be configured to cause the electronic device to, while displaying the execution screen on the display, obtain a first input. The one or more programs, when executed by the electronic device, may be configured to cause the electronic device to, based on the first input, allocate a second buffer area corresponding to a virtual display among the first buffer area and the second buffer area to the software application, and maintain the execution of the software application using the second buffer area. While the second buffer area is allocated, the execution screen of the software application may not be displayed on the display.

For example, the one or more programs, when being executed by the electronic device, may be configured to cause the electronic device to, while the first buffer area is allocated to the software application, display, on the display, the execution screen of the software application based on at least temporarily storing data related to the execution screen in the first buffer area to which access of the display is permitted, in a first state. The one or more programs, when being executed by the electronic device, may be configured to cause the electronic device to, while the second buffer area is allocated to the software application, process the data through the virtual display based on at least temporarily storing the data to be processed through the virtual display in the second buffer area, in a second state.

For example, the one or more programs, when being executed by the electronic device, may be configured to cause the electronic device to, while the second buffer area is allocated to the software application and the execution screen of the software application is not being displayed on the display, preferentially process the execution of the software application among a plurality of software applications stored in the memory.

For example, the one or more programs, when being executed by the electronic device, may be configured to cause the electronic device to display the execution screen based on the first state while executing the software application. The one or more programs, when being executed by the electronic device, may be configured to cause the electronic device to output a notification for obtaining the first input, based on maintaining execution of the software application without receiving a second input distinct from the first input for a specified time.

For example, the one or more programs, when being executed by the electronic device, may be configured to cause the electronic device to display the execution screen based on the first state while executing the software application. The one or more programs, when being executed by the electronic device, may be configured to cause the electronic device to change a state of the electronic device to the second state from the first state, based on maintaining execution of the software application for a specified time.

An electronic device according to an embodiment as described above may comprise a display, a processor, and memory for storing instructions. The instructions, when executed by the processor, may be configured to cause the electronic device to display, on the display, a first screen of a first software application based on a steady state. The instructions, when executed by the processor, may be configured to cause the electronic device to, while the first screen is displayed on the display, receive an input for execution of a second software application. The instructions, when executed by the processor, may be configured to cause the electronic device to, based on the input, preferentially perform processing of the first software application over processing of the second software application. The instructions, when executed by the processor, may be configured to cause the electronic device to, while preferentially performing processing of the first software application over processing of the second software application, display a second screen of the second software application on the display in place of the first screen. The second screen may include a visual object indicating information about the first software application while maintaining preferentially performing processing of the first software application over the processing the second software application.

For example, the instructions, when executed by the processor, may be configured to cause the electronic device to, while preferentially performing processing of the first software application over processing of the second software application, control the display to operate in a low power mode, and display the second screen displaying limited information including the visual object indicating information about the first software application.

For example, the instructions, when executed by the processor, may be configured to cause the electronic device to change a state of the display to the low power state based on execution of the second software application that changes the state of the display from the steady state to the low power state for controlling the display based on a second voltage less than the first voltage, while executing the first software application within the steady state for controlling the display based on a first voltage. The instructions, when executed by the processor, may be configured to cause the electronic device to display superimposed the second screen on the entire first screen based on the second voltage in the low power state.

For example, the instructions, when executed by the processor, may be configured to cause the electronic device to reduce the brightness of the display while controlling the display based on the second voltage.

For example, the instructions, when executed by the processor, may be configured to cause the electronic device to output a notification indicating the execution of the second software application based on displaying the first screen on the display for a specified time.

The method of the electronic device according to an embodiment as described above may comprise allocating a first buffer area to a software application being executed in foreground. The method may comprise displaying, on the display, an execution screen of the software application, being executed in foreground, corresponding to data in the first buffer area. The method may comprise, while displaying the execution screen on the display, obtaining a first input. The method may comprise, based on the first input, allocating a second buffer area corresponding to a virtual display among the first buffer area and the second buffer area to the software application, and maintaining the execution of the software application using the second buffer area. While the second buffer area is allocated, the execution screen of the software application may not be displayed on the display.

The method of the electronic device according to an embodiment as described above may comprise displaying, on the display, a first screen of a first software application based on a steady state. The method may comprise, while the first screen is displayed, receiving an input for execution of a second software application. The method may comprise, based on the input, preferentially performing processing of the first software application over processing of the second software application. The method may comprise, when executed by the processor, while preferentially performing processing of the first software application over processing of the second software application, displaying a second screen 1030 of the second software application in place of the first screen. The second screen may include a visual object indicating information about the first software application while maintaining preferentially performing processing of the first software application over the processing the second software application.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved. Therefore, other implementations, other embodiments, and those equivalent to the scope of the claims are in the scope of the claims described later.

## Claims

1. An electronic device(101), comprising:
a display (240);
a processor (210); and
memory (220) for storing instructions that, when executed by the processor, cause the electronic device to:
allocate a first buffer area (232) of the memory to a software application (223) being executed in foreground;
display, on the display, an execution screen (410) of the software application, being executed in foreground, using the first buffer area;
while displaying the execution screen on the display, obtain a first input; and
based on the first input:
allocate a second buffer area corresponding to a virtual display (235), to the software application; and
maintain the execution of the software application by allocating the second buffer area to the software application, and
wherein, while the second buffer area is allocated, the execution screen of the software application is not displayed on the display.

2. The electronic device of claim 1,
wherein the instructions, when executed by the processor, causes the electronic device to:
while the first buffer area is allocated to the software application, display, on the display, the execution screen of the software application based on at least temporarily storing data related to the execution screen in the first buffer area to which access of the display is permitted, in a first state, and
while the second buffer area, which is different from the first buffer area, is allocated to the software application, process data through the virtual display based on at least temporarily storing the data to be processed through the virtual display in the second buffer area, in a second state.

3. The electronic device of claim 1 or claim 2,
wherein the instructions, when executed by the processor, causes the electronic device to:
while the second buffer area is allocated to the software application and the execution screen of the software application is not being displayed on the display, preferentially process the execution of the software application among a plurality of software applications stored in the memory.

4. The electronic device of any of claims 1 to 3,
wherein the instructions, when executed by the processor, causes the electronic device to:
display the execution screen based on the first state while executing the software application, and
output a notification for obtaining the first input, based on maintaining execution of the software application without receiving a second input distinct from the first input for a specified time.

5. The electronic device of any of claims 1 to 4,
wherein the instructions, when executed by the processor, causes the electronic device to:
display the execution screen based on the first state while executing the software application, and
change a state of the electronic device to the second state from the first state, based on maintaining execution of the software application for a specified time.

6. The electronic device of any of claims 1 to 5, further comprising:
a camera,
wherein the instructions, when executed by the processor, causes the electronic device to:
display the execution screen based on the first state while executing the software application, and
at least temporarily cease to change a state of the electronic device to the second state from the first state while identifying a user of the electronic device by using the camera.

7. The electronic device of any of claims 1 to 6,
wherein the instructions, when executed by the processor, causes the electronic device to:
at least temporarily cease to perform an operation corresponding to the third input received through the display in the second state.

8. The electronic device of any of claims 1 to 7,
wherein the instructions, when executed by the processor, causes the electronic device to:
control the display based on a second voltage less than a first voltage corresponding to the first state for displaying the screen while maintaining the execution of the software application, based on allocating the software application to the second buffer area.

9. The electronic device of any of claims 1 to 8,
wherein the instructions, when executed by the processor, causes the electronic device to:
in the second state, disable a first group and able a second group, among the first group related to the display and the second group related to the virtual display, and
maintain the execution of the software application, in the second state in which the second group is enabled.

10. The electronic device of any of claims 1 to 9,
wherein the instructions, when executed by the processor, causes the electronic device to:
identify a fourth input for displaying an icon (421) indicating the second state while displaying the execution screen obtained using the software application,
display the icon overlapping at least a portion of the execution screen in response to the identified fourth input, and
allocate the second buffer area to the virtual display based on obtaining the first input indicating a selection of the icon.

11. A computer readable storage medium storing one or more programs, wherein the one or more programs, when being executed by an electronic device, is configured to cause the electronic device (101) to:
allocate a first buffer area (232) of a memory of the electronic device to a software application (223) being executed in foreground;
display, on a display, an execution screen (410) of the software application, being executed in foreground, using the first buffer area;
while displaying the execution screen on the display, obtain a first input; and
based on the first input:
allocate a second buffer area of the memory of the electronic device corresponding to a virtual display (235), to the software application; and
maintain the execution of the software application using the second buffer area, and
wherein, while the second buffer area is allocated, the execution screen of the software application is not displayed on the display.

12. The computer readable storage medium of claim 11 wherein the one or more programs, when being executed by the electronic device, is configured to cause the electronic device to:
while the first buffer area is allocated to the software application, display, on the display, the execution screen of the software application based on at least temporarily storing data related to the execution screen in the first buffer area to which access of the display is permitted, in a first state, and
while the second buffer area, which is different from the first buffer area, is allocated to the software application, process the data through the virtual display based on at least temporarily storing the data to be processed through the virtual display in the second buffer area, in a second state.

13. The computer readable storage medium of claim 11 or 12, wherein the one or more programs, when being executed by the electronic device, is configured to cause the electronic device to:
while the second buffer area is allocated to the software application and the execution screen of the software application is not being displayed on the display, preferentially process the execution of the software application among a plurality of software applications stored in the memory.

14. The computer readable storage medium of claim 11 to 13, wherein the one or more programs, when being executed by the electronic device, is configured to cause the electronic device to:
display the execution screen based on the first state while executing the software application, and
output a notification for obtaining the first input, based on maintaining execution of the software application without receiving a second input distinct from the first input for a specified time.

15. The computer readable storage medium of claim 11 to 14, wherein the one or more programs, when being executed by the electronic device, is configured to cause the electronic device to:
display the execution screen based on the first state while executing the software application, and
change a state of the electronic device to the second state from the first state, based on maintaining execution of the software application for a specified time.
